# EUROPEAN PATENT SPECIFICATION

(11) **EP 0 633 226 B1**
(45) Date of publication and mention of the grant of the patent: **22.04.1998**
(21) Application number: 93250267.7
(22) Date of filing: 29.09.1993
(51) Int. Cl.: C02F 5/12

(54) **Calcium carbonate anti-precipitating agents**
Kalziumkarbonatablagerungsverhinderungsmittel
Agents inhibiteurs d'incrustations de carbonate de calcium

(30) Priority: 08.07.1993 US 88710
(43) Date of publication of application: 11.01.1995
(73) Proprietor: BetzDearborn, Inc., Trevose, PA 19053 (US)
(72) Inventor: Thevissen, Peter, B-2040 Herent (BE); Colman, Ivan, B-920 Hamme (BE); Hwa, Chih Ming, Palatine, Ill. 60067 (US); Fan, Lai-Duien Grace, Lake Zurich, Ill. 60047 (US)
(74) Representative: UEXKÜLL & STOLBERG

(56) References cited:
- EP-A- 0 432 664
- EP-A- 0 478 018
- EP-A- 0 516 305
- US-A- 4 566 973
- US-A- 4 904 413

## Description

### FIELD OF THE INVENTION

This invention relates to a method for preventing or inhibiting the precipitation of calcium carbonate in aqueous systems and more particularly to a method for preventing the precipitation of calcium carbonate in aqueous systems which contain a relatively high concentration of magnesium ions.

### BACKGROUND OF THE INVENTION

Calcium carbonate precipitation is a common problem in industrial aqueous systems due to the low solubility of calcium carbonate in water, particularly in water having an elevated pH. Polyphosphates and organophosphonates have been used for stabilizing calcium carbonate in aqueous systems. However, these compounds contain phosphorus which is environmentally unacceptable since sufficiently high levels of phosphorus in the effluent stream may serve as a nutrient to aquatic life. Under high system water temperatures or long holding times, polyphosphates tend to hydrolyze to orthophosphate. The limited solubility of calcium orthophosphate, which is likely to form, makes it difficult to maintain adequate concentrations of phosphates in many instances. This reversion process can also create sludge formation problems in the aqueous system. For these reasons, the use of the polyphosphates and organophosphonates heretofore for inhibiting the precipitation of calcium carbonate have not been completely satisfactory.

### SUMMARY OF THE INVENTION

It is an object of this invention to provide a method for inhibiting or preventing the precipitation of calcium carbonate in aqueous systems.

It is another object of this invention to provide a method for inhibiting or preventing the precipitation of calcium carbonate in aqueous systems having a relatively high concentration of magnesium ions.

It is yet another object of this invention to provide a method for inhibiting or preventing the precipitation of calcium carbonate in aqueous systems using an agent which is considered calcium insensitve.

In accordance with the present invention there has been provided a method for inhibiting or preventing the precipitation of calcium carbonate in aqueous systems which contain magnesium ions which comprises adding to the system, in an amount effective to inhibit or prevent the precipitation of calcium carbonate, a copolymer of (meth)acrylic acid and t-butyl acrylamide.

### DETAILED DESCRIPTION

The present invention is directed to a novel method of inhibiting or preventing the precipitation of calcium carbonate in aqueous systems which contain a relatively high concentration of magnesium ions. For purposes of this invention, the terminology "relatively high concentration of magnesium ions" means a concentration greater than about 5 ppm. The method involves adding to the system in an amount of 0.1 to 1000 ppm certain calcium insensitive water-soluble copolymers having a polymer chain structure which comprises monomeric units of t-butyl acrylamide and units having the following formula: 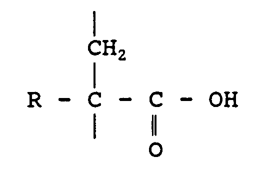 wherein R is selected from the group consisting of H and CH₃; or water-soluble salts thereof, in an amount effective to inhibit or prevent the precipitation of the calcium carbonate. The copolymer can be a copolymer of t-butyl acrylamide and acrylic acid, methacrylic acid or the sodium salts thereof.

Calcium sensitivity refers to the tendency of a compound to precipitate with calcium ions in solution. Calcium insensitivity is considered an important feature of this invention because it allows the agents of this invention to be used effectively in water of relatively high hardness. The test for calcium insensitivity of a compound as used in this application involves a cloud point test where the compound is added to a hard water containing 500 ppm calcium ion (as CaCO₃) which is buffered at pH 8.3 using 0.005 M borate buffer and has a temperature of 60°C. The amount of compound which can be added until the solution becomes turbid (the cloud point) is considered to be an indicator of calcium sensitivity. This cloud point test will be referred to herein as the "CA500 cloud point test."

The calcium insensitive compounds of this invention have cloud point of at least about 10 ppm as determined by the CA500 cloud point test. Preferred compounds have a cloud point of at least about 25 ppm; and the most preferred compounds have a cloud point of at least about 50 ppm as determined by the CA500 cloud point test because they are considered particularly volatile with regard to the water systems in which they can be effectively used. Not all water-soluble polymers, nor even all copolymers of (meth)acrylic acid and t-butyl acrylamide, exhibit calcium insensitivity.

The exact dosage amount required withy respect to a particular system can vary widely depending on the nature of the system and the amount of calcium carbonate contained therein. In general, however, the copolymers of this invention are added in very small amounts, typically in the range of from 0.1 ppm to 1000 ppm, preferably in the range 0.5 to 500 ppm and most preferably in the range of from 1 ppm to 10 ppm. Those of ordinary skill in the art can readily determine the appropriate dosage for a particular aqueous system in a conventional manner.

The copolymers of this invention are particularly suitable for use in aqueous systems having a high degree of hardness. As described more fully in the following examples, the copolymers of this invention effectively inhibited the precipitation of calcium carbonate in aqueous systems having a relatively high concentration of magnesium ions. This was surprising and unexpected, particularly in view of the ineffectiveness of several structurally similar copolymers.

The aqueous systems which may be advantageously treated in accordance with the polymers of this invention include, but are not limited to cooling water systems such as e.g. cooling towers, desalinization units, gas scrubbers, as well as to boiler systems and other recirculating water systems where scale deposits are known to form.

The polymers of this invention may be used in combination with other water treatment components customarily employed in the aqueous system including, but not limited to other scale inhibitors, corrosion inhibitors, biocides, dispersing agents, antifoaming agents, oxygen scavengers, sequestering agents, and the like and mixtures thereof.

The polymeric scale inhibitors of this invention may be added to the system by any convenient mode, such as by first forming a concentrated aqueous solution of the copolymer of acrylic acid and t-butyl acrylamide or their water soluble salts, preferably containing between 1 and 50 total weight percent of the polymer, and then feeding the concentrated aqueous solution to the aqueous system at some convenient point. In many instances the scale inhibitors may be added to the make-up or feedwater lines through which water enters the system. Typically, an injector calibrated to deliver a predetermined amount periodically or continuously to the makeup water is employed.

Without further elaboration, it is believed that one skilled in the art, using the preceding detailed description can utilize the present invention to its fullest extent.

The following examples are provided to illustrate the invention in accordance with the principles of this invention, but are not to be construed as limiting the invention in any way except as indicated in the appended claims. All parts and percentages are by weight unless otherwise indicated.

### Example 1

The ability of copolymers of (meth)acrylic acid and t-butyl acrylamide to inhibit calcium carbonate precipitation was measured using a magnesium-free water. In this test 800 ml of a test solution containing 1,000 ppm calcium and 328 ppm bicarbonate (both as CaCO₃) in a 1,000 ml beaker was stirred with magnetic stir bar and heated using a stainless steel immersion heater to 49°C. The pH was monitored during heating and kept at pH 7.15 with addition of dilute HC1. After the temperature of 49°C was achieved, 0.1 N NaOH was added to the test solution at a rate of 0.32 ml/min using a syringe pump and the rise in pH was monitored. A decrease or plateau in the rate of pH increase is observed when calcium carbonate starts to precipitate, and the pH at which this decrease or plateau is observed is termed the critical pH. The critical pH for the test solution is shown in Table 1 below along with the total milliequivalents per liter of hydroxide (as NaOH) added to reach the critical pH.

The procedure was repeated using test solutions to which 5 ppm of the respective treatment was added. The results are shown in Table 1.

**TABLE 1**

| Run | Additive | Critical pH | NaOH added to reach critical pH (meq/l) |
|---|---|---|---|
| 1 | Blank (without treatment) | 7.69 | 0.48 |
| 2 | Sodium tripolyphosphate | 8.48 | 1.61 |
| 3 | Sodium hexametaphosphate | 8.34 | 1.43 |
| 4 | Hydroxyethylidene diphosphonic acid | 8.54 | 1.63 |
| 5 | 2-Phosphonobutane-1,2,4-tricarboxylic acid | 8.74 | 1.96 |
| 6 | Copolymer of acrylic acid and t-butyl acrylamide (88:12) | 8.48 | 1.56 |
| 7 | Copolymer of acrylic acid and hydroxyethyl acrylamide (70:30) | 8.48 | 1.19 |
| 8 | Copolymer of acrylic acid and diacetone acrylamide (80:20) | 8.43 | 1.36 |

As shown in Table 1, use of the copolymer of acrylic acid and t-butyl acrylamide raised the critical pH and resulted in more sodium hydroxide addition before the critical pH was reached, when compared to a blank run without treatment. However, the copolymer of acrylic acid and t-butyl acrylamide was considerably less effective than 2-phosphonobutane-1,2,4-tricarboxylic acid, which is a commonly used calcium carbonate antiprecipitating agent, in the magnesium-free water.

### Example 2

The usefulness of the copolymers of the invention to inhibit calcium carbonate precipitation was further measured using a magnesium-containing water at 54°C. The test water contains 283 ppm calcium, 184 ppm magnesium, and 423 ppm bicarbonate (all as CaCO₃). The treatments were dosed at 5 ppm. Table 2 summarizes the results.

**TABLE 2**

| Run | Additive | Critical pH | NaOH added to reach critical pH (meq/l) |
|---|---|---|---|
| 9 | Blank (without treatment) | 8.12 | 0.91 |
| 10 | Hydroxyethylidene diphosphonic acid | 9.52 | 4.10 |
| 11 | 2-Phosphonobutane-1,2,4-tricarboxylic acid | 9.55 | 4.19 |
| 12 | Copolymer of acrylic acid and t-butyl acrylamide (88:12) | 9.98 | 6.30 |
| 13 | Copolymer of acrylic acid and methylol acrylamide (68:32) | 9.08 | 2.38 |
| 14 | Copolymer of acrylic acid and hydroxyethyl acrylamide (70:30) | 9.18 | 2.07 |

It can be seen from Table 2 that copolymers of (meth)acrylic acid and t-butyl acrylamide were very effective in preventing the precipitation of calcium carbonate. These copolymers outperformed all other additives tested including 2-phosphonobutane-1,2,4-tricarboxylic acid when the magnesium ions were present in the test water.

### Example 3

The effectiveness of the copolymers of this invention to control calcium carbonate precipitation was again evaluated using a magnesium-containing water at 54°C. The test water contains 283 ppm calcium, 184 ppm magnesium, and 423 ppm bicarbonate (all as CaCO₃). The additives were tested at 2.5 ppm. The results are tabulated in Table 3.

**TABLE 3**

| Run | Additive | Critical pH | NaOH added to reach critical pH (meq/l) |
|---|---|---|---|
| 15 | Blank (without treatment) | 8.12 | 0.91 |
| 16 | Hydroxyethylidene diphosphonic acid | 9.40 | 3.49 |
| 17 | 2-Phosphonobutane-1,2,4-tricarboxylic acid | 9.13 | 2.86 |
| 18 | Copolymer of acrylic acid and t-butyl acrylamide (88:12) | 9.97 | 6.16 |
| 19 | Copolymer of acrylic acid and methylol acrylamide (68:32) | 8.93 | 1.94 |
| 20 | Copolymer of acrylic acid and hydroxyethyl acrylamide (70:30) | 8.90 | 1.70 |
| 21 | Copolymer of acrylic acid and diacetone acrylamide (80:20) | 8.92 | 2.22 |

As shown in Table 3, the copolymer of acrylic acid and t-butyl acrylamide was a superior treatment in inhibiting the precipitation of calcium carbonate in an aqueous system. In the test water containing magnesium ion, the copolymer of acrylic acid and t-butyl acrylamide was vastly more effective than all other additives tested at low dosage levels.

Unlike the copolymer of acrylic acid and t-butyl acrylamide, the copolymer of acrylic acid and methylol acrylamide, the copolymer of acrylic acid and hydroxyethyl acrylamide, and the copolymer of acrylic acid and diacetone acrylamide were relatively ineffective in preventing the precipitation of calcium carbonate when the magnesium ion was present in the test water.

### Example 4

This example demonstrates that not all water-soluble polymers, nor even all copolymers of (meth)acrylic acid and t-butyl acrylamide, exhibit calcium insensitivity. The results are shown in Table 4 below.

**TABLE 4**

| Run No. | Additive | Cloud Point, ppm |
|---|---|---|
| 1 | Polyacrylic acid (PAA-45) | 4 |
| 2 | Sodium polymethacrylate (LPC-30) | 6 |
| 3 | Copolymer of acrylic acid and t-butyl acrylamide (97.5/2.5) | 4 |
| 4 | Copolymer of acrylic acid and t-butyl acrylamide (92/8) | <2 |
| 5 | Copolymer of acrylic acid and t-butyl acrylamide (90/10) | 7 |
| 6 | Copolymer of acrylic acid and t-butyl acrylamide (88/12) | 36 |
| 7 | Copolymer of acrylic acid and t-butyl acrylamide (85/15) | 39 |
| 8 | Copolymers of acrylic acid and t-butyl acrylamide (80/20) | >100 |
| 9 | Copolymer of acrylic acid and t-butyl acrylamide (75/25) | >100 |

### Example 5

This example demonstrates that not all water-soluble polymers, nor even all copolymers of (meth)acrylic acid and t-butyl acrylamide, exhibit calcium insensitivity. The terminology "calcium insensitive compound", as used herein, refers to those compounds which do not precipitate in moderate to high hardness waters.

The use for calcium insensitivity of a compound as used in this invention involves a cloud point test where the compound is added to a hard water containing 500 ppm calcium ion (as CaCO₃) which is buffered at pH 8.3 using 0.005 M borate buffer and has a temperature of 60°C. The amount of compound which can be added until the solution becomes turbid (the cloud point) is considered to be an indicator of calcium sensitivity. This cloud point test will be referenced to herein as the "CA500 cloud point test." Suitable calcium insensitive compounds have cloud points of at least 10 ppm as determined by the CA500 cloud point test. The results are shown in Table 5 below.

**TABLE 5**

| Run No. | Additive | Cloud Point, ppm |
|---|---|---|
| 1 | Polyacrylic acid (PAA-45) | 4 |
| 2 | Sodium polymethacrylate (LPC-30) | 6 |
| 3 | Copolymer of acrylic acid and t-butyl acrylamide (97.5/2.5) | 4 |
| 4 | Copolymer of acrylic acid and t-butyl acrylamide (92/8) | <2 |
| 5 | Copolymer of acrylic acid and t-butyl acrylamide (90/10) | 7 |
| 6 | Copolymer of acrylic acid and t-butyl acrylamide (88/12) | 36 |
| 7 | Copolymer of acrylic acid and t-butyl acrylamide (85/15) | 39 |
| 8 | Copolymer of acrylic acid and t-butyl acrylamide (80/20) | >100 |
| 9 | Copolymer of acrylic acid and t-butyl acrylamide (75/25) | >100 |

### Example 6

The ability of various polymers to inhibit calcium carbonate precipitation was measured using a magnesium-free water. In this test 800 ml of a test solution containing 1,000 ppm calcium and 328 ppm bicarbonate (both as CaCO₃) in a 1,000 ml beaker was stirred with magnetic stir bar and heated using a stainless steel immersion heater to 49°C. The pH was monitored during heating and kept at pH 7.15 with addition of dilute HCl. After the temperature of 49°C was achieved, 0.1 N NaOH was added to the test solution at a rate of 0.32 ml/min using a syringe pump and the rise in pH was monitored. A decrease or plateau in the rate of pH increase is observed when calcium carbonate starts to precipitate, and the pH at which this decrease or plateau is observed is termed the critical pH. The critical pH for the test solution is shown in Table 2 below along with the total milliequivalents per liter of hydroxide (as NaOH) added to reach the critical pH.

The procedure was repeated using test solutions to which 5 ppm of the respective treatment was added. The results are shown in Table 6.

**TABLE 6**

| Run | Additive | Critical pH | NaOH added to reach critical pH (meq/l) |
|---|---|---|---|
| 1 | Blank (without treatment) | 7.69 | 0.48 |
| 2 | Sodium tripolyphosphate | 8.48 | 1.61 |
| 3 | Sodium hexametaphosphate | 8.34 | 1.43 |
| 4 | Hydroxyethylidene diphosphonic acid | 8.54 | 1.63 |
| 5 | 2-Phosphonobutane-1,2,4-tricarboxylic acid | 8.74 | 1.96 |
| 6 | Copolymer of acrylic acid and t-butyl acrylamide (93:7 by mole), m.w. 5,700 | 8.48 | 1.56 |
| 7 | Polyacrylic acid, m.w. 2,400 | 8.54 | 1.33 |
| 8 | Sodium polymethacrylate, m.w. 4,500 | 8.30 | 0.98 |
| 9 | Copolymer of sodium acrylate and acrylamide (91:9 by mole), m.w. 2,000 | 8.51 | 1.37 |
| 10 | Copolymer of potassium methacrylate and AMPS (acrylamido methyl propane sulfonic acid) (67:33 by mole), m.w. 21,600 | 8.32 | 0.89 |

As shown in Table 6, use of the polymers (Run Nos. 6-10) raised the critical pH and resulted in more sodium hydroxide addition before the critical pH was reached, when compared to a blank run without treatment. However, the polymers were considerably less effective than 2-phosphonobutane-1,2,4-tricarboxylic acid, which is a commonly used calcium carbonate antiprecipitating agent, in the magnesium-free water.

### Example 7

The usefulness of various polymers to inhibit calcium carbonate precipitation was further measured using a magnesium-containing water at 54°C. The test water contains 283 ppm calcium, 184 ppm magnesium, and 423 ppm bicarbonate (all as CaCO₃). The treatments were dosed at 5 ppm. Table 7 summarizes the results.

**TABLE 7**

| Run | Additive | Critical pH | NaOH added to reach critical pH (meq/l) |
|---|---|---|---|
| 11 | Blank (without treatment) | 8.12 | 0.91 |
| 12 | Hydroxyethylidene diphosphonic acid | 9.52 | 4.10 |
| 13 | 2-Phosphonobutane-1,2,4-tricarboxylic acid | 9.55 | 4.19 |
| 14 | Copolymer of acrylic acid and t-butyl acrylamide (93:7 by mole), m.w. 5,700 | 9.98 | 6.30 |
| 15 | Polyacrylic acid, m.w. 2,400 | 9.33 | 3.62 |
| 16 | Sodium polymethacrylate, m.w. 4,500 | 8.93 | 1.78 |
| 17 | Copolymer of sodium acrylate and acrylamide (91:9 by mole), m.w. 2,000 | 9.07 | 2.51 |
| 18 | Copolymer of potassium methacrylate and AMPS (acrylamido methyl propane sulfonic acid) (67:33 by mole), m.w. 21,600 | 8.65 | 1.50 |

It can be seen from Table 7 that copolymers of (meth)acrylic acid and t-butyl acrylamide (Run No. 14) were very effective in preventing the precipitation of calcium carbonate. These copolymers outperformed all other additives tested including 2-phosphonobutane-1,2,4-tricarboxylic acid when the magnesium ions were present in the test water. On the other hand, four polymers described in the Khambatta et al. patent (Run Nos. 15-18) remain inferior to 2-phosphonobutane-1,2,4-tricarboxylic acid in the presence of magnesium ions.

### Example 8

The effectiveness of the copolymers of this invention to control calcium carbonate precipitation was again evaluated using a magnesium-containing water at 54°C. The test water contains 283 ppm calcium, 184 ppm magnesium, and 423 ppm bicarbonate (all as CaCO₃). The additives were tested at 2.5 ppm. The results are tabulated in Table 8.

**TABLE 8**

| Run | Additive | Critical pH | NaOH added to reach critical pH (meq/l) |
|---|---|---|---|
| 19 | Blank (without treatment) | 8.12 | 0.91 |
| 20 | Hydroxyethylidene diphosphonic acid | 9.40 | 3.49 |
| 21 | 2-Phosphonobutane-1,2,4-tricarboxylic acid | 9.13 | 2.86 |
| 22 | Copolymer of acrylic acid and t-butyl acrylamide (93:7 by mole), m.w. 5,700 | 9.97 | 6.16 |
| 23 | Polyacrylic acid, m.w. 2,400 | 9.18 | 2.75 |
| 24 | Sodium polymethacrylate, m.w. 4,500 | 8.72 | 1.60 |
| 25 | Copolymer of sodium acrylate and acrylamide (91:9 by mole), m.w. 2,000 | 8.91 | 2.04 |
| 26 | Copolymer of potassium methacrylate and AMPS (acrylamido methyl propane sulfonic acid) (67:33 by mole), m.w. 21,600 | 8.58 | 1.38 |

As shown in Table 8, the copolymer of acrylic acid and t-butyl acrylamide (Run No. 22) was a superior treatment in inhibiting the precipitation of calcium carbonate in an aqueous system. In the test water containing magnesium ion, the copolymer of acrylic acid and t-butyl acrylamide was vastly more effective than all other additives tested at low dosage levels.

Unlike the copolymer of acrylic acid and t-butyl acrylamide, the polyacrylic acid, the sodium polymethacrylate, the copolymer of sodium acrylate and acrylamide, and the copolymer of potassium methacrylate and AMPS cited in the Khambatta et al patent (Run Nos. 23-26) were relatively ineffective in preventing the precipitation of calcium carbonate when the magnesium ion was present in the test water.

## Claims

1. A method for inhibiting or preventing the precipitation of calcium carbonate in aqueous systems containing at least 5 ppm of magnesium ions comprising adding to the system, in an amount of 0.1 to 1000 ppm a water-soluble copolymer having a CA500 cloud point of greater than 10 ppm and a polymer chain structure which comprises monomeric units of t-butyl acrylamide and units having the following formula: 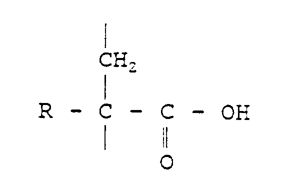 wherein R is of the class consisting of H and CH₃; or its water-soluble salts.

2. A method according to Claim 1 wherein the copolymer is a copolymer of acrylic acid and t-butyl acrylamide.

3. A method according to Claim 1 wherein the copolymer is a copolymer of sodium acrylate and t-butyl acrylamide.

4. A method according to Claim 1 wherein the copolymer is a copolymer of methacrylic acid and t-butyl acrylamide.

5. A method according to Claim 1 wherein the copolymer is a copolymer of sodium methacrylate and t-butyl acrylamide.

6. A method according to claim 1 wherein the effective amount is in the range of from 0.5 to 500 ppm.

7. A method according to claim 1 wherein the effective amount is in the range of from 1 to 10 ppm.

## Patentansprüche

1. Verfahren zur Inhibierung oder Verhinderung der Abscheidung von Calciumcarbonat in wäßrigen Systemen, die mindestens 5 ppm an Magnesiumionen enthalten, bei welchem dem System in einer Menge von 0,1 bis 1000 ppm ein wasserlösliches Copolymer, welches einen CA500-Trübungspunkt von mehr als 10 ppm und eine Polymerkettenstruktur aufweist, die monomere Einheiten von t-Butylacrylamid und Einheiten der folgenden Formel: 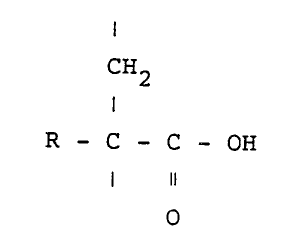 enthält, wobei R aus der Klasse bestehend aus H und CH₃ ist, oder seine wasserlöslichen Salze zugegeben wird.

2. Verfahren nach Anspruch 1, bei dem das Copolymer ein Copolymer von Acrylsäure und t-Butylacrylamid ist.

3. Verfahren nach Anspruch 1, bei dem das Copolymer ein Copolymer von Natriumacrylat und t-Butylacrylamid ist.

4. Verfahren nach Anspruch 1, bei dem das Copolymer ein Copolymer von Methacrylsäure und t-Butylacrylamid ist.

5. Verfahren nach Anspruch 1, bei dem das Copolymer ein Copolymer von Natriummethacrylat und t-Butylacrylamid ist.

6. Verfahren nach Anspruch 1, bei dem die wirksame Menge in dem Bereich von 0,5 bis 500 ppm ist.

7. Verfahren nach Anspruch 1, bei dem die wirksame Menge in dem Bereich von 1 bis 10 ppm ist.

## Revendications

1. Procédé pour inhiber ou empêcher la précipitation du carbonate de calcium dans des systèmes aqueux contenant au moins 5 ppm d'ions magnésium, comprenant l'addition au système, en une quantité de 0,1 à 1.000 ppm d'un copolymère soluble dans l'eau ayant un point de trouble CA500 supérieur à 10 ppm et une structure de chaîne polymère qui comprend des unités monomères de t-butyl acrylamide et des unités représentées par la formule suivante : 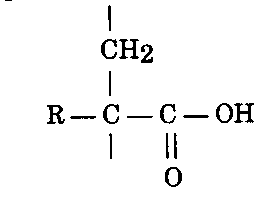 dans laquelle R est choisi dans le coupe consistant en atome d'hydrogène et groupe CH₃; ou de ses sels solubles dans l'eau.

2. Procédé suivant la revendication 1, dans lequel le copolymère est un copolymère d'acide acrylique et de t-butyl acrylamide.

3. Procédé suivant la revendication 1, dans lequel le copolymère est un copolymère d'acrylate de sodium et de t-butyl acrylamide.

4. Procédé suivant la revendication 1, dans lequel le copolymère est un copolymère d'acide méthacrylique et de t-butyl acrylamide.

5. Procédé suivant la revendication 1, dans lequel le copolymère est un copolymère de méthacrylate de sodium et de t-butyl acrylamide.

6. Procédé suivant la revendication 1, dans lequel la quantité efficace est comprise dans la gamme de 0,5 à 500 ppm.

7. Procédé suivant la revendication 1, dans lequel la quantité efficace est comprise dans la gamme de 1 à 10 ppm.
